# EUROPEAN PATENT SPECIFICATION

(11) **EP 2 177 022 B1**
(45) Date of publication and mention of the grant of the patent: **16.03.2016**
(21) Application number: 08763147.9
(22) Date of filing: 30.05.2008
(51) Int. Cl.: H04N 5/20

(54) **A RECEIVER AND A CONTROL METHOD**
EMPFÄNGER UND KONTROLLVERFAHREN
RÉCEPTEUR ET PROCÉDÉ DE COMMANDE

(30) Priority: 08.06.2007 TR 200703979
(43) Date of publication of application: 21.04.2010
(73) Proprietor: Arçelik Anonim Sirketi, 34445 Istanbul (TR)
(72) Inventor: AYDIN, Kaan, 34901 Istanbul (TR); TUNALI, Aydin, 34901 Istanbul (TR); AG, Veli, 34901 Istanbul (TR); ATALAY, Koray, 34901 Istanbul (TR)
(86) International application number: PCT/IB2008/052110
(87) International publication number: WO 2008/149264

(56) References cited:
- GB-A- 918 424
- JP-A- 8 018 894
- JP-A- 54 107 213
- US-A- 3 569 620
- US-A- 5 655 047
- US-A- 5 764 299

## Description

### Field of the Invention

The present invention relates to a receiver and a control method which carry out automatic gain adjustment of a video signal.

### Prior Art

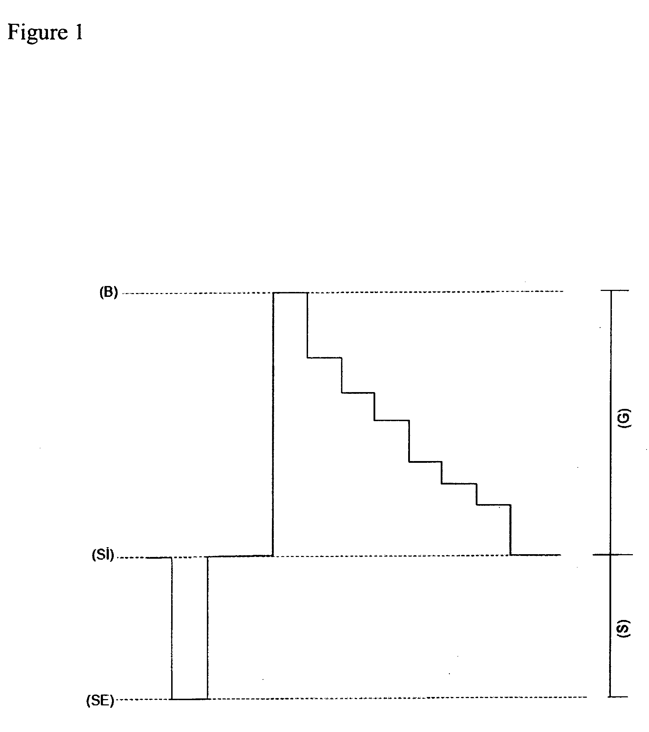

In receivers, which are devices such as analog televisions that receive and process video signals, variations in the amplitude and/or frequency of broadcast signals are conveyed via analog signals which enable transfer of video and audio information. Analog television signals comprise in their overall structure a synchronization signal and a video signal on top of it (Figure 1). Under normal conditions, synchronization signals have standard amplitudes. Whereas video signals have a standard amplitude range under normal conditions and they are comprised of an aggregate of signals of various amplitudes corresponding to the brightness and color values of the video image.

However, amplitude of the video signal and/or the synchronization signal in TV broadcasts may deviate from the standard from time to time. In such cases various malfunctions occur in the operation of the TV parts. For example, an increase of the amplitude of the video signal to very high levels causes exceeding the limits of analog-digital converters and saturation of these converters. When the signal amplitude is too low, A/D converter is not used very efficiently. Furthermore, continuous change of the amplitude of the video signal during broadcast creates distortion in the image quality. For example this situation may cause the image brightness on the screen to vary continuously.

In the state of the art, controllers which carry out automatic gain control are used in televisions just like in many electronic devices (radio, telephone, radar systems, etc.) in order to avoid these kinds of problems. These controllers determine the decreases and increases, which occur in the signal amplitude and lead to deviations from normal levels, and they try to adjust the signal amplitude according to its normal level. In this adjustment process, the proportion, with which the signal is required to be changed in order to bring it to its normal level,/ is calculated as a result of the comparison made with several foreknown reference values. After the calculation, the signal is brought to the normal level by increasing or decreasing the signal amplitude by this gain ratio.

In the method disclosed in the USA patent application No. US4970594, within the state of the art, the required gain control is performed after the amplitude of a part of the video signal of which the reference level is known, for example the synchronization signal, is measured. The USA patent application No. US5379075 also discloses an application where synchronization signal is taken as reference.

The USA patent application No. US2005162562, within the state of the art, discloses a method wherein also variables other than the amplitude of the synchronization signal are also considered when determining the automatic gain value.

The Japanese patent application No. JP3117569, discloses a method wherein an amplitude coefficient is calculated and used during application of A/D conversion to the video signal in order to attain optimum automatic gain control. In this method, peak values of the signal are determined and compared with a prescribed value, and an amplification factor is used for readjusting the gain according to the result of this comparison.

The general logic of the solution encountered in prior art documents is determination of the gain ratio upon comparing the signal levels with the predetermined reference values. While variations in the synchronization signal are taken as basis in some methods, some other methods benefit from more general variables such as maximum signal amplitude. Since synchronization signals have fixed amplitudes under normal conditions, the most common method of solution is to change the gain of the whole signal using the amplitude of the synchronization signal as reference. For example, when the amplitude of the synchronization signal, whose standard value is 300 mV (S_{std}), is measured as 150 mV, this value has to be doubled to reach the standard value (300 mV). Accordingly, the gain ratio is calculated by dividing standard synchronization signal amplitude (S_{std}) by measured synchronization signal amplitude (S). Since the calculated gain ratio in this example is 300 mV / 150 mV, the gain to be applied to the video signal is adjusted to be 2 and the amplitude of the video signal is doubled. In cases typically encountered in television broadcasts, since the distortion in the synchronization signal and the video signal take place as an increase or a decrease of both of them, the controllers which perform adjustment only according to the synchronization signal often operate accurately.

However, there may also be non-standard variations in the signals from time to time and applications of prior art techniques can not provide an effective solution for such problems. For example in some cases, although the range of the peak level (white level) (B) of the video signal and the bottom level of the synchronization signal (synchronization level) (SE) remain constant, black level of the analog signal (black/blank level) (SI) may change. Occurrence of such a variation in the signal means loss of the directly proportional relationship between the video signal amplitude (G) and the synchronization signal amplitude (S). For instance, when the black level (SI) decreases, synchronization signal amplitude (S) falls below the standard value (S_{std}) while the video signal amplitude (G) rises above the normal amplitude. In this case, if a control method, which performs gain control taking only the synchronization signal amplitude (S) as a reference, is applied, amplitude of the video signal (G) will be increased. Since this will cause increasing the already increased video signal amplitude (G) further, it will lead to an undesired flashing in the image. Additionally, in the case that the variability in the signal levels is continuous, there will occur flickering in the image.

Accordingly, comparison of the synchronization signal amplitude (S) in the received signal with the standard amplitude of synchronization signal (S_{std}) might not always be sufficient to attain the desired result. Apart from this, in some methods, 1V level of the video signal which corresponds to 100% white color is taken as reference. In this approach, where there is not any signal of the said level, there occurs the problem of flickering in the image.

### Summary of the Invention

The objective of the present invention is to realize a receiver and a control method which carry out a more effective and accurate gain adjustment.

The receiver and control method realized to fulfill the objectives of the present invention and defined in the first claim and its dependent claims, performs gain adjustment by comparing the current value of the video signal with a previous value thereof.

Carrying out an incorrect gain adjustment is prevented by taking into account the variations in the white level of the video signal in addition to the variations in the synchronization signal.

The inventive receiver and control method determine whether the variations in the synchronization signal and video signal are directly proportional or not and accordingly perform a directly or inversely proportional gain adjustment.

In the inventive receiver and control method, in order to avoid incorrect adjustments in automatic gain adjustments applied to analog TV signals that might result from comparing only a certain part of the signal (synchronization signal, etc.) with a reference value, the current white level (B) and a previous value of the white level (Bₚᵣₑ) are compared and the variation in the white level is also determined. The variation in the white level is used together with the variation in the synchronization level (SE) for determination of the gain. Accordingly, both the variations in the synchronization signal and the variations in the white level (B) are monitored in order to determine the gain to be applied to the signal. The variation between the synchronization signal amplitude (S) and the standard synchronization signal amplitude (S_{std}) is compared with a predetermined threshold value (E1), and the variation between the white level (B) and a previous white level (Bₚᵣₑ) is compared with another threshold value (E2), and various gain adjustments are carried out depending on the said variations being above or below the threshold values (E1, E2).

If the variation between the synchronization signal amplitude (S) and the standard synchronization signal amplitude (S_{std}) is greater than the E1 threshold value and the variation between the white level (B) and a previous white level (Bₚᵣₑ) is also greater than the E2 threshold value, a directly proportional gain ratio (K_{d}) is applied to the video signal. If the variation between the synchronization signal amplitude (S) and the standard synchronization signal amplitude (S_{std}) is greater than the E1 threshold value and the variation between the white level (B) and a previous white level (Bₚᵣₑ) is smaller than the E2 threshold value, an inversely proportional gain ratio (Kₜ) is applied to the video signal. By selecting the proper option among the directly or inversely proportional gain options, errors that might come about in gain adjustment are minimized. In cases where the variation between the synchronization signal amplitude (S) and the standard synchronization signal amplitude (S_{std}) is smaller than the E1 threshold value, the video signal is not changed.

The E1 and E2 threshold values can be determined in accordance with the operation conditions of the method and the desired precision level. For example, different threshold values (E1, E2) can be determined for applications where the variation between the compared signal values is calculated according to the difference or proportion of the signal value.

### Detailed Description of the Invention

The receiver and control method realized to fulfill the objective of the present invention is illustrated in the accompanying figures in which,
Figure 1 is the diagram showing the overall structure of the analog TV signal.
Figure 2 is the flowchart of the inventive method.
Figure 3 is the schematic view of the inventive receiver.

The components shown in the figures are numbered as follows:
1. Receiver
2. Controller

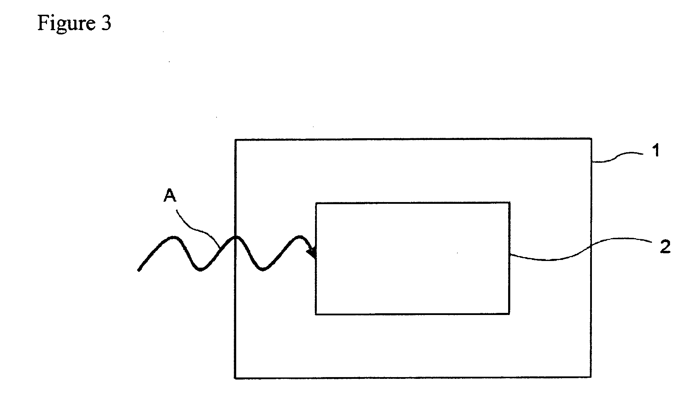

The inventive video signal receiver (1) comprises a controller (2) which carries out gain adjustment on analog signals (Figure 3).

The signal (A) received by the receiver (1) comprises a synchronization signal and a video signal.

The controller (2) performs automatic gain adjustment of the received signal (A) according to the variations in the synchronization signal and the video signal received by the receiver (1).

The controller (2) determines the amount of gain adjustment to be applied to the received signal (A) by comparing the synchronization signal amplitude (S) with the standard synchronization signal amplitude (S_{std}) and according to the current variation amount of the white level (B) of the video signal.

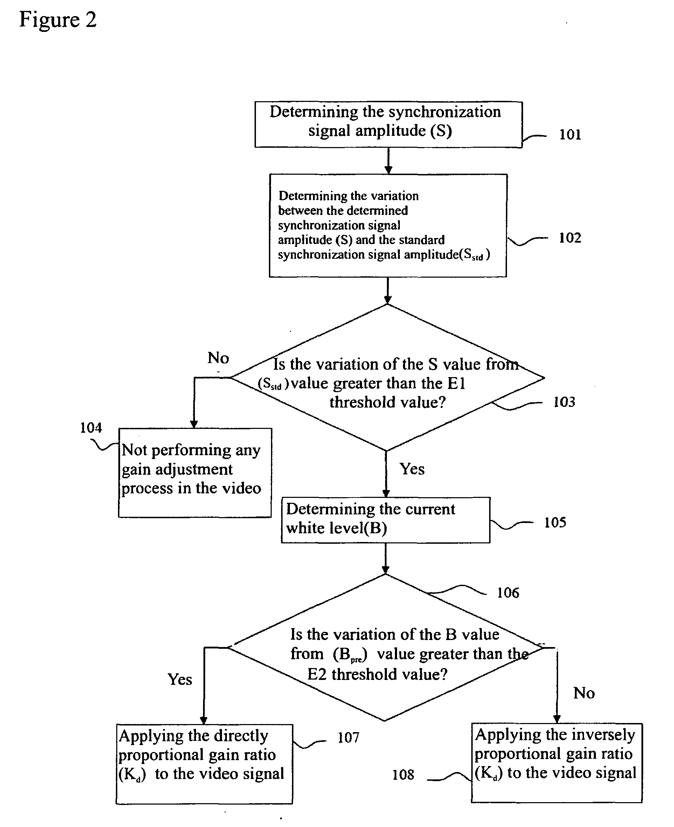

In the inventive receiver (1), the automatic gain adjustment process for the received signal (A) is performed by following steps (Figure 2):
- Determining the synchronization signal amplitude (S) in the received signal (A) (101),
- Determining the variation between the determined synchronization signal amplitude (S) and the standard synchronization signal amplitude (S_{std}) (102),
- Comparing the variation of the synchronization signal amplitude (S) from the standard synchronization signal amplitude (S_{std}) with the E1 threshold value (103),
- If the variation therebetween is not greater than the E1 threshold value, not to perform any gain adjustment process in the video (104),
- If the variation therebetween is greater than the E1 threshold value, determining the current white level (B) in the received signal (A) (105),
- Comparing the variation of the current white level (B) from a previous white level (Bₚᵣₑ) with the E2 threshold value (106),
- If the variation between the current white level (B) and a previous white level (Bₚᵣₑ) is greater than the E2 threshold value, applying the directly proportional gain ratio (K_{d}) to the video signal (107),
- If the variation between the current white level (B) and a previous white level (Bₚᵣₑ) is not greater than the E2 threshold value, applying the inversely proportional gain ratio (K_{d}) to the video signal (108).

In the preferred embodiment of the inventive method, first of all the synchronization signal amplitude (S) is determined (101). Subsequently, the variation between this amplitude (S) and the standard synchronization signal amplitude is determined (102). The determined variation is compared with the E1 threshold value (103). If this difference is below the E1 threshold value, it is deduced that there is no significant variation in the synchronization signal and no adjustment is made in the gain ratio (104). Accordingly in this case, no intervention is made to the amplitude of the video signal. In the case that the variation between the synchronization signal amplitude (S) and the standard synchronization signal amplitude (S_{std}) is greater than the E1 value, the current white level (B) is determined (105), and in order for the gain ratio to be determined, the variation between the current white level (B) and a previous white level (Bₚᵣₑ) is compared with the E2 value (106). If this variation is greater than the E2 value, it is deduced that there is a direct proportion between the variation in the synchronization signal and the variation in the video signal, that is, if the amplitude of one of the said signals increases the amplitude of the other also increases and if it decreases the amplitude of the other decreases as well. In this case, the directly proportional gain ratio (K_{d}) is determined. When the video signal amplitude is changed with this gain ratio (K_{d}), this ratio (K_{d}) is applied to the video signal in a direct proportion (107). In this case, the adjusted video signal amplitude (G_{end}) equals to the amplitude of the same signal prior to adjustment (G), multiplied by the gain ratio (K_{d}).

When it is determined that the variation between the current white level (B) of the signal (A) received in the comparison step (106) and a previous white level (Bₚᵣₑ) is smaller than the E2 value, it is deduced that even though a significant variation occurred in the synchronization signal there occurred an insignificant variation in the white level (B), thus there is an inverse proportion between the variation in the synchronization signal and the variation in the video signal.

In this case, if the synchronization signal amplitude (S) increased, the video signal amplitude (G) decreased; if the synchronization signal amplitude (S) decreased the video signal amplitude (G) increased. In order to correct this distortion in the structure of the signal, an inversely proportional gain ratio (Kₜ) should be applied to the video signal. In such a case, the inversely proportional gain ratio (Kₜ) is determined. The video signal amplitude (G) is changed in the said calculated gain ratio (Kₜ) (108). The amplitude (G_{end}) of the video signal obtained as a result of this adjustment equals to the amplitude (G) of the same signal prior to adjustment, multiplied by the gain ratio (Kₜ).

In all these calculations, the synchronization signal amplitude (S) equals to the difference between the black level (SI) and the synchronization level (SE) and the video signal amplitude (G) equals to the difference between the white level (B) and the black level (SI).

In one embodiment of the invention, the directly proportional gain ratio (K_{d}) is established as the proportion of the standard synchronization signal amplitude (S_{std}) to the determined synchronization signal amplitude (S). The inversely proportional gain ratio (Kₜ) is obtained by adding 1 to the proportion of the difference between the synchronization signal amplitude (S) and the standard synchronization signal amplitude (S_{std}), to the video signal amplitude (G).

In this embodiment of the invention, the above described gain adjustment process applied on the received signal (A) can be expressed with the help of formulas as follows:
If | S - S_{std} | < E1, no gain is applied on the received signal (A).
If | S - S_{std} | > E1 and | B - Bₚᵣₑ|> E2, in order to perform a directly proportional gain adjustment, the directly proportional gain ratio is calculated as K_{d} = (S_{std} / S) and as a result of the gain adjustment, G_{end} = G * K_{d}.
If | S - Sₛₜₛ | > E1 and | B - Bₚᵣₑ | < E2, in order to perform an inversely proportional gain adjustment, the inversely proportional gain ratio is calculated as Kₜ = 1 + ((S - S_{std}) / G) and as a result of the gain adjustment, G_{end} = G * Kₜ.

For example, where
The previous white level (Bₚᵣₑ) = 721mV,
Standard synchronization signal amplitude (S) = 300mV,
E1 = E2 = 5mV,
a) If in the received signal (A),
   Black level (SI) = 321mV,
   Synchronization level (SE) = 20mV,
   White level (B) = 724mV,
   Then,
   S = 321mV - 20mV = 301mV,
   G = 721mV - 321mV = 400mV.
   In this case, since | S - S_{std} | = 1mV < E1, it is not needed to have any gain adjustment performed on the signal.
b) If in the received signal (A),
   Black level (SI) = 221 mV,
   Synchronization level (SE) = 20mV,
   White level (B) = 488mV,
   Then,
   S = 221mV - 20mV = 201 mV,
   G = 488mV - 221 mV = 267mV.
   In this case, since | S - S_{std} | = 99mV > E1, a gain adjustment should be performed on the received signal A. The variation in the white level is checked to decide whether the gain will be directly proportional or inversely proportional. Since in this case | B - Bₚᵣₑ | = 23mV > E2, a directly proportional gain adjustment should be performed.
   The directly proportional gain ratio is calculated as K_{d} = S_{std} / S = 300 / 201 = 1.5 and applied to the video signal to obtain G_{end} = G * K_{d} = 267mV * 1.5 = 400,5mV.
c) If in the signal received (A),
   Black level (SI) = 376mV,
   Synchronization level (SE) = 20mV,
   White level (B) = 722mV,
   Then,
   S = 376mV - 20mV = 356mV,
   G = 722mV -376mV = 346mV.
   In this case, since | S - S_{std} | = 56mV > E1, a gain adjustment should be performed on the received signal A. The variation in the white level is checked to decide whether the gain will be directly proportional or inversely proportional. Since in this case | B - Bₚᵣₑ | = 1mV < E2, an inversely proportional gain adjustment should be performed.
   The directly proportional gain ratio is calculated as Kₜ = 1 + ((S - S_{std}) / G) = 1 + (56 / 346) = 1.16 and applied to the video signal to obtain G_{end} = G * K_{d} =346mV * 1.16=401mV.

In the embodiment of the inventive receiver (1) and method described above with examples, in determining the variation between the amplitude (S) of the received synchronization signal and the amplitude of the standard synchronization signal (S_{std}), the difference between the two values is taken into consideration. In another embodiment of the invention, the ratio between the two values is taken into account for determining the variation. The threshold value (E1) may vary according to the relation taken into account.

In the embodiment of the inventive receiver (1) and method described above with examples, in determining the variation between the received current white level (B) and a previous white level (Bₚᵣₑ), the difference between the two values is taken into consideration. In another embodiment of the invention, the ratio between the two values is taken into account for determining the variation. The threshold value (E2) varies according to the relation taken into account.

In case there are inversely proportional variations between the video signal and the synchronization signal, this relation is determined and a suitable gain adjustment is performed by means of the inventive method. In the state of the art, since the automatic gain adjustment is carried out by comparing only a certain part of the received signal (A) with a predetermined reference value, in cases of inversely proportional variations, the results obtained can be completely the opposite of the improvement desired to be achieved in the video image. In order to prevent all of these problems, in addition to the said reference values, the variations in all signal amplitudes should also be monitored. For that reason, a comparison of the current white level (B) of the signal with a previous white level (Bₚᵣₑ) is also performed in the inventive method.

Within the scope of this basic concept, it is possible to develop various embodiments of the inventive method. The invention is essentially according to the claims, and cannot be limited to the examples described herein.

## Claims

1. A video signal receiver (1) comprising a controller (2) which performs gain adjustment on analog video signals and which calculates the amount of gain adjustment to be applied to the video signal by comparing the synchronization signal amplitude (S) in the received signal (A) with the standard synchronization signal amplitude (S_{std}) and by evaluating the current variation amount of the white level of the video signal **characterized in that** the controller (2) determines the variation of the synchronization signal amplitude (S) from the standard synchronization signal amplitude (S_{std}); in case the said variation is greater than a certain value, takes into account the variation in the white level (B); and as a result of evaluation of the variation in the white level (B), applies directly proportional gain ratio (K_{d}) or inversely proportional gain ratio (Kₜ) to the video signal in the process of gain adjustment of the analog signals.

2. A control method for a receiver (1) according to Claim 1, **characterized by** the steps of
- Determining the synchronization signal amplitude (S) (101),
- Determining the variation between the determined synchronization signal amplitude (S) and the standard synchronization signal amplitude (S_{std}) (102),
- Determining whether or not the variation of the synchronization signal amplitude (S) from the standard synchronization signal amplitude (S_{std}) is greater than the E1 threshold value (103),
- If the variation therebetween is not greater than the E1 threshold value, not performing any gain adjustment process in the video (104),
- If the variation therebetween is greater than the E1 threshold value, determining the current white level (B) (105),
- Determining whether or not the variation of the current white level (B) from a previous white level (Bₚᵣₑ) is greater than the E2 threshold value (106),
- If the variation between the current white level (B) and a previous white level (Bₚᵣₑ) is greater than the E2 threshold value, applying the directly proportional gain ratio (K_{d}) to the video signal (107),
- If the variation between the current white level (B) and a previous white level (Bₚᵣₑ) is not greater than the E2 threshold value, applying the inversely proportional gain ratio (Kₜ) to the video signal (108).

3. A control method according to Claim 2, wherein, in determining the variation between the synchronization signal amplitude (S) and the standard synchronization signal amplitude (S_{std}), the difference between the two values is taken into consideration.

4. A control method according to Claim 2, wherein, in determining the variation between the synchronization signal amplitude (S) and the standard synchronization signal amplitude (S_{std}), the ratio of the two amplitude values is taken into consideration.

5. A control method according to Claim 3, wherein, in determining the variation between the current white level (B) and a previous white level (Bₚᵣₑ), the difference between the two values is taken into consideration.

6. A control method according to Claim 4, wherein, in determining the variation between the current white level (B) and a previous white level (Bₚᵣₑ), the ratio of the two amplitude values is taken into consideration.

7. A control method according to Claim 5 or 6, wherein the directly proportional gain ratio is calculated as (K_{d}) the ratio of the standard synchronization signal amplitude (S_{std}) to the determined synchronization signal amplitude (S).

8. A control method according to Claim 5 or 6, wherein the inversely proportional gain ratio (Kₜ) is calculated by adding 1 to the proportion of the difference between the synchronization signal amplitude (S) and the standard synchronization signal amplitude (S_{std}), to the video signal amplitude (G).

## Patentansprüche

1. Videosignalempfänger (1), umfassend eine Steuereinrichtung (2), die eine Verstärkungsanpassung eines analogen Videosignals durchführt und das Ausmaß der Verstärkungsanpassung berechnet, das auf das Videosignal angewandt werden soll, indem sie die Synchronisationssignalamplitude (S) im empfangenen Signal (A) mit der Standardsynchronisationssignalamplitude (S_{std}) vergleicht und die aktuelle Abweichungsmenge des Weißpegels des Videosignals bewertet, **dadurch gekennzeichnet, dass** die Steuereinrichtung (2) die Abweichung der Synchronisationssignalamplitude (S) von der Standardsynchronisationssignalamplitude (S_{std}) bestimmt; falls die Abweichung größer als ein bestimmter Wert ist, die Abweichung im Weißpegel (B) berücksichtigt; und als ein Ergebnis der Bewertung der Abweichung im Weißpegel (B) im Prozess der Verstärkungsanpassung der analogen Signale ein direkt proportionales Verstärkungsverhältnis (K_{d}) oder umgekehrt proportionales Verstärkungsverhältnis (Kₜ) auf das Videosignal anwendet.

2. Steuerverfahren für einen Empfänger (1) nach Anspruch 1, **gekennzeichnet durch** die Schritte
- Bestimmen der Synchronisationssignalamplitude (S) (101),
- Bestimmen der Abweichung zwischen der determined Synchronisationssignalamplitude (S) und der Standardsynchronisationssignalamplitude (S_{std}) (102),
- Bestimmen, ob die Abweichung der Synchronisationssignalamplitude (S) von der Standardsynchronisationssignalamplitude (S_{std}) größer als der Schwellenwert E1 ist (103),
- wenn die Abweichung dazwischen nicht größer als der Schwellenwert E1 ist, kein Durchführen eines Verstärkungsanpassungsprozesses am Video (104),
- wenn die Abweichung dazwischen größer als der Schwellenwert E1 ist, Bestimmen des aktuellen Weißpegels (B) (105),
- Bestimmen, ob die Abweichung des aktuellen Weißpegels (B) von einem vorherigen Weißpegel (Bₚᵣₑ) größer als der Schwellenwert E2 ist (106),
- wenn die Abweichung zwischen dem aktuellen Weißpegel (B) und einem vorherigen Weißpegel (Bₚᵣₑ) größer als der Schwellenwert E2 ist, Anwenden eines direkt proportionalen Verstärkungsverhältnis (K_{d}) auf das Videosignal (107),
- wenn die Abweichung zwischen dem aktuellen Weißpegel (B) und einem vorherigen Weißpegel (Bₚᵣₑ) nicht größer als der Schwellenwert E2 ist, Anwenden eines umgekehrt proportionalen Verstärkungsverhältnis (Kₜ) auf das Videosignal (108),

3. Steuerverfahren nach Anspruch 2, wobei beim Bestimmen der Abweichung zwischen der Synchronisationssignalamplitude (S) und der Standardsynchronisationssignalamplitude (S_{std}) die Differenz zwischen den zwei Werten berücksichtigt wird.

4. Steuerverfahren nach Anspruch 2, wobei beim Bestimmen der Abweichung zwischen der Synchronisationssignalamplitude (S) und der Standardsynchronisationssignalamplitude (S_{std}) das Verhältnis der zwei Amplitudenwerte berücksichtigt wird.

5. Steuerverfahren nach Anspruch 3, wobei beim Bestimmen der Abweichung zwischen dem aktuellen Weißpegel (B) und einem vorherigen Weißpegel (Bₚᵣₑ) die Differenz zwischen den zwei Werten berücksichtigt wird.

6. Steuerverfahren nach Anspruch 4, wobei beim Bestimmen der Abweichung zwischen dem aktuellen Weißpegel (B) und einem vorherigen Weißpegel (Bₚᵣₑ) das Verhältnis der zwei Amplitudenwerte berücksichtigt wird.

7. Steuerverfahren nach Anspruch 5 oder 6, wobei das direkt proportionale Verstärkungsverhältnis als (K_{d}) mal das Verhältnis der Standardsynchronisationssignalamplitude (S_{std}) zur bestimmten Synchronisationssignalamplitude (S) berechnet wird.

8. Steuerverfahren nach Anspruch 5 oder 6, wobei das umgekehrt proportionale Verstärkungsverhältnis (Kₜ) berechnet wird, indem 1 zu dem Verhältnis der Differenz zwischen der Synchronisationssignalamplitude (S) und der Standardsynchronisationssignalamplitude (S_{std}) zur Videosignalamplitude (G) hinzuaddiert wird.

## Revendications

1. Un récepteur de signaux vidéo (1) comprenant un contrôleur (2) qui effectue le réglage de gain sur un signal vidéo analogique et qui calcule la quantité du réglage de gain à appliquer au signal vidéo en comparant l'amplitude de signal de synchronisation (S) dans le signal reçu (A) avec l'amplitude normale de signal de synchronisation (S_{std}) et en évaluant la quantité actuelle de variation du niveau de blanc du signal vidéo, **caractérisé en ce que** le contrôleur (2) détermine la variation de l'amplitude de signal de synchronisation (S) par référence à l'amplitude normale de signal de synchronisation (S_{std}), et si ladite variation est supérieure à une certaine valeur, il tient compte de la variation dans le niveau de blanc (B), et à la suite de l'évaluation de la variation dans le niveau de blanc (B), il applique le rapport de gain directement proportionnel (K_{d}) ou le rapport de gain inversement proportionnel (Kₜ) au signal vidéo dans le processus du réglage de gain des signaux analogiques.

2. Un procédé de commande pour un récepteur (1) selon la Revendication 1, **caractérisé par** les étapes de
- Déterminer l'amplitude de signal de synchronisation (S) (101),
- Déterminer la variation de l'amplitude déterminée de signal de synchronisation (S) par référence à l'amplitude normale de signal de synchronisation (S_{std}) (102),
- Déterminer si ou non la variation de l'amplitude de signal de synchronisation (S) par référence à l'amplitude normale de signal de synchronisation (S_{std}) est supérieure à la valeur de seuil E1 (103),
- Ne pas effectuer le processus du réglage de gain dans le vidéo si ladite variation n'est pas supérieure à la valeur de seuil E1 (104),
- Déterminer le niveau actuel de blanc (B) si ladite variation est supérieure à la valeur de seuil E1 (105),
- Déterminer si ou non la variation du niveau actuel de blanc (B) par référence à un niveau de blanc précédent (Bₚᵣₑ) est supérieure à la valeur de seuil E2 (106),
- Appliquer le rapport de gain directement proportionnel (K_{d}) au signal vidéo si la variation du niveau actuel de blanc (B) par référence à un niveau de blanc précédent (Bₚᵣₑ) est supérieure à la valeur de seuil E2 (107),
- Appliquer le rapport de gain inversement proportionnel (Kₜ) au signal vidéo si la variation du niveau actuel de blanc (B) par référence à un niveau de blanc précédent (Bₚᵣₑ) n'est pas supérieure à la valeur de seuil E2 (108).

3. Un procédé de commande selon la Revendication 2, où, dans la détermination de la variation de l'amplitude de signal de synchronisation (S) par référence à l'amplitude normale de signal de synchronisation (S_{std}), la différence entre les deux valeurs est prise en considération.

4. Un procédé de commande selon la Revendication 2, où, dans la détermination de la variation de l'amplitude de signal de synchronisation (S) par référence à l'amplitude normale de signal de synchronisation (S_{std}), le rapport des deux valeurs de l'amplitude est pris en considération.

5. Un procédé de commande selon la Revendication 3, où, dans la détermination de la variation du niveau actuel de blanc (B) par référence à un niveau de blanc précédent (Bₚᵣₑ), la différence entre les deux valeurs est prise en considération.

6. Un procédé de commande selon la Revendication 4, où, dans la détermination de la variation du niveau actuel de blanc (B) par référence à un niveau de blanc précédent (Bₚᵣₑ), le rapport des deux valeurs de l'amplitude est pris en considération.

7. Un procédé de commande selon la Revendication 5 ou 6, où le rapport de gain directement proportionnel est calculé comme (K_{d}) le rapport de l'amplitude normale de signal de synchronisation (S_{std}) à l'amplitude déterminée de signal de synchronisation (S).

8. Un procédé de commande selon la Revendication 5 ou 6, où le rapport de gain inversement proportionnel (Kₜ) est calculé en ajoutant 1 au rapport la différence entre l'amplitude de signal de synchronisation (S) et l'amplitude normal de signal de synchronisation (S_{std}), de l'amplitude de signal vidéo (G).
